# EUROPEAN PATENT APPLICATION

(11) **EP 2 840 111 A1**
(43) Date of publication of application: **25.02.2015**
(21) Application number: 13778771.9
(22) Date of filing: 09.04.2013
(51) Int. Cl.: C08J 9/06, C08L 23/08

(54) **RUBBER FOAM COMPOSITION AND RUBBER FOAM USING SAME**

(30) Priority: 18.04.2012 JP 2012094442
(71) Applicant: Bridgestone Corporation, Tokyo 104-8340 (JP)
(72) Inventor: ACHIHA Koji, Yokohama-shi Kanagawa 244-8510 (JP); SAKAMI Takahiro, Yokohama-shi Kanagawa 244-8510 (JP); ITOYAMA Tsuyoshi, Yokohama-shi Kanagawa 244-8510 (JP)
(74) Representative: Oxley, Robin John George
(86) International application number: PCT/JP2013/060720
(87) International publication number: WO 2013/157443

(57) **Abstract**

Provided are a rubber foam composition from which a rubber foam having low metal corrosive properties, low fogging properties and reduced odor and causing no poor foaming or tackiness of the rubber foam surface can be obtained, and a rubber foam using the same.

The rubber foam composition comprises: a rubber component including a copolymer rubber of ethylene, an α-olefin having three or more carbon atoms and a non-conjugated diene, a vulcanizing agent, and a foaming agent, the composition being characterized in that the vulcanizing agent comprises α,α'-di(t-butylperoxy)diisopropylbenzene and a quinoid-based vulcanizing agent, and characterized by being substantially free of urea-based foaming auxiliary, and the rubber foam uses the same.

## Description

### Technical Field

The present invention relates to a rubber foam usable for a sealing material and the like interposed between members to provide sealing, and more particularly to a vulcanized foam of a rubber foam composition comprising an ethylene-α-olefin-diene copolymer-based rubber component, the vulcanized foam having low metal corrosive properties, low fogging properties and reduced odor.

### Background Art

A rubber foam has conventionally been used as sealing materials for filling spacings between members in constructs such as buildings, vehicles, and electronic devices for purposes of waterproofing, heat insulation, noise absorption, and other purposes. A rubber foam is widely used, for example, in roof tile seals, around sashes, around shutters, in external wall joints, in metal roof joints and the like of a house, in window dams, around a sunroof, around doors, in a cowl top seal and the like of an automobile, on a back of indoor device of an air conditioner, in a door portion of a vending machine, on a back of a refrigerator and the like. Having appropriate repulsion (compressive stress) properties, a rubber foam can follow, and tightly contact with, surface irregularities of a sealed material with only a small amount of compressive deformation applied, and can thus achieve improved sealing performance.

Among others, owing to excellent weather resistance, heat resistance and sealing performance thereof, a rubber foam is widely used, which is obtained by vulcanizing and foaming a rubber foam composition comprising a rubber component such as ethylene-α-olefin-diene copolymer rubber with a vulcanizing agent such as sulfur, and a foaming agent such as azodicarbonamide being blended (e.g., Patent Literature 1). Also a urea-based foaming auxiliary is generally used for a rubber foam composition to adjust the foaming temperature, and to accelerate foaming, of azodicarbonamide as described in Patent Literature 1.

Meanwhile, when used for a sealing material in a structure including glass and/or metal, a rubber foam poses problems, such as for example, corrosion in metal, odor generation in the use environment, mist generation (also referred to as "fogging") on a glass plate, which result from a sulfur-based vulcanizing agent, a urea-based foaming auxiliary, and/or the like.

To solve these problems, various technologies have been developed. For example, Patent Literature 1 discloses a rubber foam whose low fogging properties have been achieved by blending specific process oil with a rubber foam composition, and thus preventing urea from adhering on glass.

Patent Literature 2 discloses a method in which a peroxide is used as a vulcanizing agent for a rubber foam; a rubber foam composition is formed so that an oxygen-blocking layer is formed on an outer surface in order to prevent vulcanization retardation caused by oxygen; and the resultant composition is foamed and vulcanized by a hot-air vulcanization technique. Furthermore, Patent Literature 3 discloses that an ethylene-propylene-diene rubber foam having predetermined waterproof properties and not corrosive to metal is obtained by using a quinoid-based crosslinking agent.

### Prior Art Literatures

### Patent Literatures

Patent Literature 1: JP 2001-139715 A
Patent Literature 2: JP 11-255933 A
Patent Literature 3: JP 2012-17452 A

### Summary of the Invention

### Problem to be Solved by the Invention

However, the rubber foam of Patent Literature 1 can only solve the fogging problem. The method for preparing a rubber foam disclosed in Patent Literature 2 requires complex steps for forming an oxygen-blocking layer, and moreover, may produce an odor depending on the peroxide. If an oxygen-blocking layer is not provided, vulcanization retardation caused by oxygen presents a problem that a surface of rubber foam becomes sticky (also referred to as "surface tackiness"), and/or a problem that deposit is formed on a surface (also referred to as "blooming"). In addition, according to studies by the present inventors, it has been found that the quinoid-based crosslinking agent used in the rubber foam of Patent Literature 3 does not provide a sufficient crosslink density, and may thus result in poor foaming in the rubber foam.

Accordingly, an object of the present invention is to provide a rubber foam composition that can produce a rubber foam having low metal corrosive properties, low fogging properties and reduced odor, the rubber foam not causing tackiness or bloom on a rubber foam surface, nor resulting in poor foaming in the rubber foam.

Another object of the present invention is to provide a rubber foam using the rubber foam composition.

### Means for Solving Problem

In order to achieve these objects, the present inventors have made extensive studies on a composition that does not cause surface tackiness or bloom, nor result in poor foaming in the rubber foam, under conditions such that no sulfur-based vulcanizing agent is used, which may be corrosive to metal, as a vulcanizing agent for the rubber foam composition, and that no urea-based foaming auxiliary is added, which presents a problem of fogging when used in a structure including glass, and a problem in that an odor is produced in the use environment. As a result, the present inventors have found that the objects described above can be achieved by using, as a vulcanizing agent, a particular organic peroxide and a quinoid-based vulcanizing agent.

That is, one of the objects described above can be achieved by a rubber foam composition comprising a rubber component including a copolymer rubber of ethylene, an α-olefin having three or more carbon atoms and a non-conjugated diene (hereinafter also referred to as ethylene-α-olefin-diene copolymer rubber), a vulcanizing agent, and a foaming agent, and is characterized in that the vulcanizing agent comprises α,α'-di(t-butylperoxy)diisopropylbenzene and a quinoid-based vulcanizing agent, and the rubber foam composition is substantially free of urea-based foaming auxiliary.

Preferred aspects of a rubber foam composition according to the present invention are as follows:
(1) The quinoid-based vulcanizing agent is p,p'-dibenzoylquinone dioxime.
(2) A total content of the vulcanizing agent is 1 to 10 parts by mass relative to 100 parts by mass of the rubber component.
(3) A ratio (A/B) of a content (A) of the α,α'-di(t-butylperoxy)diisopropylbenzene relative to a content (B) of the quinoid-based vulcanizing agent in the vulcanizing agent is in a range from 0.1 to 2.4.
(4) The foaming agent is azodicarbonamide.
(5) The copolymer rubber is an ethylene-propylene-diene copolymer rubber.

The other one of the objects described above can be achieved by a rubber foam containing a vulcanized foam of the rubber foam composition of the present invention. A rubber foam of the present invention is prepared by using a rubber foam composition of the present invention, and therefore the rubber foam has low metal corrosive properties, low fogging properties and reduced odor, and furthermore, is free of surface tackiness and bloom, and exhibits good foaming properties.

### Effects of the Invention

By utilizing a combination of a particular organic peroxide and a quinoid-based vulcanizing agent as the vulcanizing agent, a rubber foam composition according to the present invention can produce a good quality of rubber foam without adding a sulfur-based vulcanizing agent nor a urea-based foaming auxiliary. This can achieve a high quality of rubber foam having low metal corrosive properties, low fogging properties and a reduced odor.

### Description of Embodiments

A rubber foam composition according to the present invention comprises a rubber component including an ethylene-α-olefin-diene copolymer rubber, a vulcanizing agent, and a foaming agent, and is characterized in that the vulcanizing agent comprises α,α'-di(t-butylperoxy)diisopropylbenzene and a quinoid-based vulcanizing agent, and the rubber foam composition is substantially free of urea-based foaming auxiliary.

Note that as used in the present invention, the term "vulcanization" is not limited in use to crosslinking by sulfur, but is used synonymously with "crosslinking."

By avoiding the use, as a vulcanizing agent, of a sulfur-based vulcanizing agent corrosive to metal in the rubber foam composition, the rubber foam obtained can be low corrosive to metal. Additionally, since a urea-based foaming auxiliary is not substantially contained, the rubber foam obtained can be low fogging, and can also reduce odor generation due to a urea-based foaming auxiliary. A urea-based foaming auxiliary contains primarily urea or a derivative thereof, and indeed adjusts the foaming temperature, and accelerates foaming, of the foaming agent, but a rubber foam composition according to the present invention exhibits good foaming properties without adding a urea-based foaming auxiliary as shown in Examples presented below. The phrase "the rubber foam composition is substantially free of urea-based foaming auxiliary" means that the content of the urea-based foaming auxiliary is less than or equal to 0.1% by mass, preferably less than or equal to 0.05% by mass, in particular 0% by mass relative to the total mass of the rubber foam composition.

Materials of a rubber foam composition of the present invention will be described below in more detail.

### [Vulcanizing Agent]

As described above, the vulcanizing agent comprises α,α'-di(t-butylperoxy)diisopropylbenzene and a quinoid-based vulcanizing agent.

α,α'-di(t-butylperoxy)diisopropylbenzene is an organic peroxide having reduced odor, and is thus capable of further reducing the odor generation of a rubber foam obtained. Moreover, use with a quinoid-based vulcanizing agent can prevent surface tackiness and bloom due to vulcanization retardation caused by oxygen. Note that, as shown in Examples presented below, a vulcanizing agent containing only a quinoid-based vulcanizing agent results in poor foaming.

α,α'-di(t-butylperoxy)diisopropylbenzene may be the para isomer, the meta isomer, or a mixture thereof, and is commercially available. Examples thereof include PERBUTYL (registered trademark) P (manufactured by NOF Corporation), PEROXYMON F-40 (manufactured by NOF Corporation), and the like.

The quinoid-based vulcanizing agent may be of any kind, but is preferably a derivative of p-quinone dioxime. More specifically, examples include p,p'-dibenzoylquinone dioxime, p-quinone dioxime, and p-benzoylquinone diamide. Among others, p,p'-dibenzoylquinone dioxime is preferred due to good foaming properties.

As to a rubber foam composition according to the present invention, no specific limitations exist on the total content of the vulcanizing agent, which may be adjusted as appropriate based on the amount of blending of the foaming agent depending on the usage of the rubber foam to be produced. Considering that both an excess and inadequate amounts of blending of the vulcanizing agent may result in poor foaming, the total content of the vulcanizing agent is preferably 1 to 10 parts by mass, more preferably 2 to 8 parts by mass, and even more preferably 3 to 6 parts by mass relative to 100 parts by mass of the rubber component. An inadequate amount of the vulcanizing agent may result in an insufficient degree of vulcanization, and thus the density may become undesirably high since gas from the foaming agent fails to be trapped.

An excess amount of the vulcanizing agent may result in a high density since an excess degree of vulcanization prevents sufficient inflation.

The blend ratio between the two vulcanizing agents has no specific limitations. However, in order to sufficiently exert the effects of both vulcanizing agents, the ratio by mass (A/B) of the content (A) of the α,α'-di(t-butylperoxy)diisopropylbenzene relative to the content (B) of the quinoid-based vulcanizing agent in the vulcanizing agent is preferably 0.1 to 2.4, and more preferably 0.2 to 1.2. A ratio by mass less than or equal to 0.1 may result in an insufficient degree of vulcanization, and thus the density may become undesirably high since gas is insufficiently trapped. A ratio by mass greater than or equal to 2.4 may result in an insufficient degree of vulcanization on the surfaces of the foam, and thus a surface may become sticky.

### [Foaming agent]

A foaming agent is a compound used for generating gas for foaming. No specific limitations exist on selection of the foaming agent. Examples include azo compounds such as azodicarbonamide (ADCA), azo-bis-iso-butyronitrile, and barium azodicarboxylate, nitroso compounds such as N,N'-dinitrosopenta-methylenetetramine (DPT), hydrazine compounds such as 4,4'-oxybis(benzenesulfonyl hydrazide) (OBSH), and inorganic compounds such as sodium bicarbonate, ammonium carbonate. A combination of one or more of these substances may be used. Among others, azodicarbonamide (ADCA) is preferred from a viewpoint of good foaming, safe, and atoxic characteristics.

In the present invention, no specific limitations exist on the total content of the foaming agent, which may be adjusted as appropriate based on the amount of blending of the vulcanizing agent depending on the usage of the rubber foam to be produced. Since an excess amount of blending may cause the rubber foam to fracture, if, for example, ADCA is used as a foaming agent, the content thereof is preferably 10 to 40 parts by mass, more preferably 15 to 30 parts by mass, relative to 100 parts by mass of the rubber component.

### [Rubber Component]

As described above, the rubber component contains at least a copolymer of ethylene, an α-olefin having three or more carbon atoms, and a non-conjugated diene (i.e., ethylene-α-olefin-diene copolymer rubber).

The α-olefin is preferably an α-olefin having 3 to 20 carbon atoms. More specifically, examples include propylene, 1-butene, 4-methyl-1-pentene, 1-hexene, 1-octene, 1-decene, 1-dodecene, 1-tetradecene, 1-hexadecene, 1-octadecene, and 1-eicocene. Among others, propylene is preferably used.

Examples of non-conjugated diene include 1,4-hexadiene, 1,6-octadiene, 1,7-octadiene, 1,8-nonadiene, 1,9-decadiene, 2-methyl-1,5-hexadiene, 6-methyl-1,5-hexadiene, 7-methyl-1,6-octadiene, cyclohexadiene, dicyclopentadiene, methyl tetrahydroindene, 5-vinyl-2-norbomene (vinyl-norbornene), 5-ethylidene-2-norbornene, and 5-methylene-2-norbornene. Among others, 5-ethylidene-2-norbornene is preferably included.

The ethylene-α-olefin-diene copolymer rubber is preferably an ethylene-propylene-diene copolymer rubber (also referred to as EPDM).

The content of the ethylene-α-olefin-diene copolymer rubber relative to the rubber foam composition is preferably greater than or equal to 15% by mass, and more preferably greater than or equal to 20% by mass.

In the present invention, another rubber component may be used together as a supplementary agent in addition to the ethylene-α-olefin-diene copolymer rubber. Examples of such a rubber component include ethylene-propylene rubber (EPM) and butyl rubber (IIR), as well as isoprene rubber (IR), natural rubber (NR), styrene-butadiene rubber (SBR), butadiene rubber (BR), 1,2-polybutadiene (RB), acrylic rubber (ACM, ANM), chlorosulfonated polyethylene (CSM), chloroprene rubber (CR), and silicone rubber. Among others, EPM and IIR are preferred.

### [Other Components]

A rubber foam composition according to the present invention may further include other additives as needed.

Examples of used additives include fillers such as calcium carbonate, magnesium carbonate, silicic acids, silicates thereof, talc, clay, mica powder, bentonite, carbon black, silica, aluminum hydroxide, magnesium hydroxide, alumina, aluminum silicate, acetylene black, aluminum powder, ceramics, glass fiber, wood flour, and textile waste; thiazole, dithiocarbamate, thiourea, dithiophosphite, and thiuram vulcanization accelerators, as well as vulcanization accelerator aids such as zinc oxide (active zinc white), for accelerating vulcanization; cell control agents for controlling diameters of cells generated during foaming, including fatty acids such as stearic acid, and metal salts of fatty acids such as zinc stearate and calcium stearate; resin softeners such as paraffin oil, process oil, blow asphalt, polybutene, rosins, and rosin esters; resins such as polyethylene, polypropylene, and ethylene-vinyl acetate copolymer; dehydrators such as calcium oxide; and anti-aging agents and antioxidants, pigments and coloring agent, and fungicides. One or more of these additives may be added as needed. No specific limitations exist on the amount of addition of the additives to be added, and the additives may be used as long as advantages of the present invention will not be negated.

### [Method for Preparing Rubber Foam]

A rubber foam of the present invention can be prepared by vulcanizing and foaming a rubber foam composition of the present invention. More specifically, for example, the following steps may be used.

First, materials other than the foaming agent, the vulcanizing agent, and the vulcanization accelerator, the cell control agent and the like used as necessary are mixed and kneaded. Kneading may be performed by using an internal mixer such as a Banbury mixer, a kneader, or an Intermix mixer. Kneading is performed preferably at a temperature in the range of 80 to 170°C, particularly 90 to 140°C, for 2 to 20 minutes. Then, the foaming agent, the vulcanization aid, the vulcanizing agent, the cell diameter control agent and the like are added to the mixture, and the resultant mixture is kneaded. This kneading operation is performed preferably at a temperature in the range of 40 to 90°C, particularly 50 to 80°C, for 5 to 30 minutes. The mixture obtained is then formed in a desired shape, such as a sheet, by using a calendering machine, an extruder, or a similar apparatus.

After formed in a desired shape, the mixture is introduced into a vulcanizer, and is then vulcanized and foamed by heating at a temperature in the range of 130 to 270°C, preferably 140 to 200°C, for 1 to 30 minutes (vulcanization and foaming step). This forms a rubber foam having a closed-cell structure. When the mixture is heated in the vulcanization vessel, heating means such as a hot air vulcanizing vessel (HAV), a glass bead fluidized bed, or a microwave (UHF) vulcanizer, steam may be used. Note that vulcanization and foaming may be performed simultaneously, or sequentially under different temperature conditions.

If a rubber foam of the present invention is prepared, a cell breaking process step may further be performed after the vulcanization and foaming step of the rubber foam composition. The cell breaking process step ruptures at least a part of closed cells so that these cells communicate with one another in order to provide the rubber foam with an open-cell structure. The cell breaking process is performed using a common method, and can be performed by using a method in which the rubber foam is compressed between a pair of rollers (roll crushing technique), a method in which the rubber foam is placed under vacuum and compressed (vacuum crushing technique), a method in which the rubber foam is punched with countless needles by using a needle punch) (needle punch technique), a method in which the rubber foam is compressed between a pair of flat plates (flat plate compression technique), or other methods.

No specific limitations exist on the density (i.e., mass/volume) of a rubber foam obtained by using a method of the present invention. Indeed, such density is preferably less than or equal to 0.3 g/cm³, more preferably less than or equal to 0.2 g/cm³, even more preferably less than or equal to 0.15 g/cm³. A rubber foam having a density within these ranges can be said to have a sufficiently reduced density. It is assumed here that the density is measured according to a method provided in JIS K6268A standard.

A rubber foam of the present invention uses a rubber foam composition of the present invention, and thus has low metal corrosive properties, low fogging properties and reduced odor, is free of surface tackiness and bloom, and exhibits good foaming properties. Accordingly, a rubber foam of the present invention can be used as a sealing material for sealing a spacing between members, for example, in a window dam of a vehicle; in an electric installation such as an air conditioner, a washing machine, a refrigerator, and a vending machine; in audio equipment; in external wall joints, around sashes, in roof member joints and the like of a building; in household equipment such as kitchen equipment, a modular bus, and a water heater; in a construction such as a construct, road and bridge joints, and water channel joints. In addition, a rubber foam of the present invention can also be used as a dust preventive material, a heat insulator, a noise absorber, a vibration absorber, a shock absorber, a filler, or the like for the purposes of dust prevention, heat insulation, noise insulation, vibration insulation, shock absorption, water tightness, air tightness and the like.

When used as a sealing material, the rubber foam preferably has a sheet-like shape, and may be processed such that adhesive or a double-stick tape is applied, and release paper is applied, on at least one surface. The thickness of rubber foam may be determined depending on the usage thereof, and preferably is 20 to 100 mm.

### Examples

The present invention will be further described using the following Examples.

### Examples 1 to 8 and Comparative Examples 1 to 9

First, the rubber component, pigment, filler, and softener of the blend components shown in Tables 1 and 2 were kneaded together at a temperature of 130°C for 10 minutes by using a kneader. Subsequently, the resultant mixture was cooled to a surface temperature of 25°C, and then the process aid, dehydrator, vulcanizing agent, vulcanization accelerator (Comparative Example 9), foaming agent, and foaming auxiliary (Comparative Examples 6 to 9) were further added to the mixture according to the blend composition shown in Tables 1 and 2. This mixture was kneaded at a temperature of 90°C for 7 minutes by using the kneader. The mixture obtained was then formed into 10 mm thick × 100 mm wide × 100 mm long sheets by an extruder for rubber, after which the sheets obtained were placed in a heating furnace, were preheated at a temperature of 100°C for 30 minutes, were heated to a temperature of 175°C for a period of 30 minutes, and were then vulcanized and foamed at the temperature of 175°C for 15 minutes thus to produce the rubber foam.

Details of the blend components were as follows. Description of details of the other general components is omitted.

EPDM: ESPRENE 505A (diene content: 9.5% by mass) (manufactured by Sumitomo Chemical Co., Ltd.),
PEROXYMON F-40: contains 40% by mass of α,α'-di(t-butylperoxy)diisopropylbenzene (manufactured by NOF Corporation),
PERCUMYL (registered trademark) D40: contains 40% by mass of dicumyl peroxide (manufactured by NOF Corporation),
PERHEXA (registered trademark) 25B: 2,5-dimethyl-2,5-di(t-butylperoxy)hexane (manufactured by NOF Corporation),
p,p'-dibenzoylquinone dioxime: VUNOLUC DGM (manufactured by Ouchi Shinko Chemical Industrial Co., Ltd.),
p-quinone dioxime: VUNOLUC GM (manufactured by Ouchi Shinko Chemical Industrial Co., Ltd.), and
azodicarbonamide: VINYFOR AC#LQ (manufactured by Eiwa Chemical Ind. Co., Ltd.).

### Evaluation Method

### (1) Low metal corrosive properties

An amount (0.5 g) of the rubber foam obtained was placed in a 100 ml closed vessel. Polished and cleaned silver and copper plates were adhered inside the vessel, and the vessel was left at a temperature of 85°C for 7 days, after which each plate was checked for corrosion. A symbol ○ indicates that corrosion was not observed in that case, and a symbol × indicates that corrosion was observed in that case.

### (2) Low fogging properties

A volume (10 cm³) of the rubber foam obtained was placed in a 500 ml glass bottle. The glass bottle was left at a temperature of 80°C for 20 hours, after which the glass bottle was checked for mist (fogging). A symbol ○ indicates that mist was not observed in that case, and a symbol × indicates that mist was observed in that case.

### (3) Reduced odor

Sensory evaluation was performed on the rubber foam obtained. A symbol ○ indicates that an odor due to the corresponding additive was not noticed in that case, and a symbol × indicates that an odor due to the corresponding additive was noticed in that case.

### (4) Bloom

An observation was made on a surface of the rubber foam obtained. A symbol ○ indicates that deposit was not observed in that case, and a symbol × indicates that deposit was observed in that case.

### (5) Surface tackiness

A surface of the rubber foam obtained was evaluated by finger touch. A symbol ○ indicates that the surface was not sticky in that case, and a symbol × indicates that the surface was sticky in that case.

### (6) Foaming condition

Appearance of the rubber foam obtained was evaluated by visual observation. A symbol ○ indicates that the rubber foam has good appearance in that case. A symbol × indicates that the surface was shrank (an excess level of foaming caused ruptured cells, and gas release from the surface caused shrinkage) in that case. A symbol × × indicates that the foam has a fissure or a bulge (vulcanization proceeded too fast so that the surface was stiff and cracked) in that case. A symbol × × × indicates that crosslinking was insufficient.

### (7) Density

After the skin layer was removed from the rubber foam obtained, measurement was performed according to a method provided in JIS K6268A standard.

### Evaluation Result

The result of evaluation is shown in Table 1.

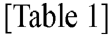

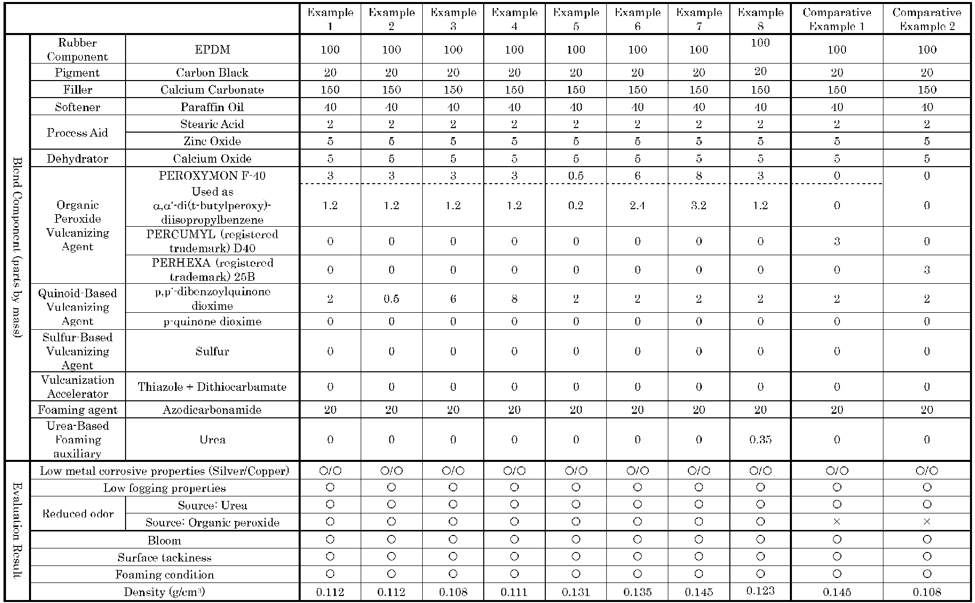

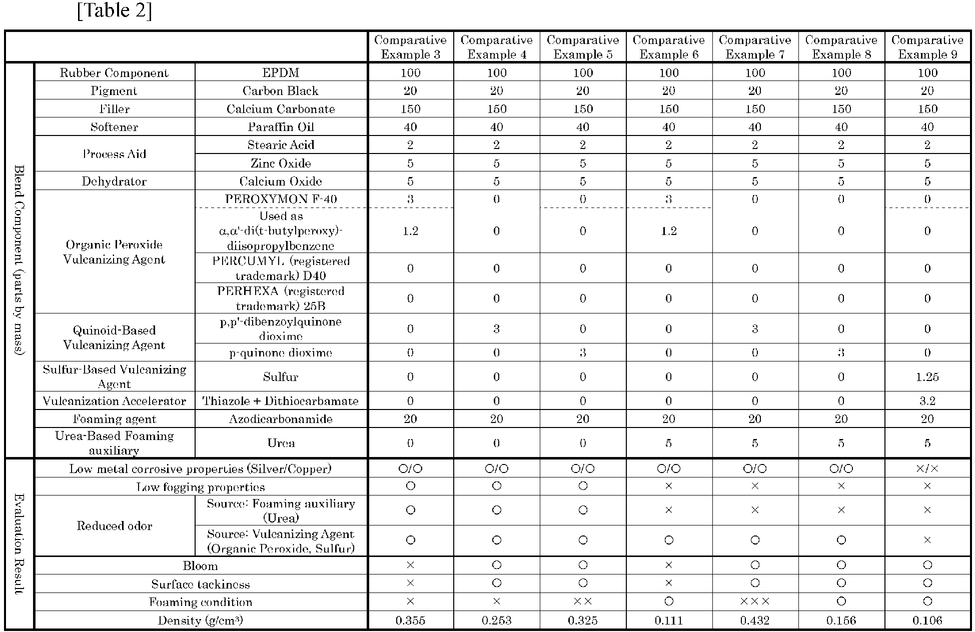

As shown in Tables 1 and 2, the rubber foams of Examples 1 to 7 prepared from a rubber foam composition that contained, as the vulcanizing agent, both α,α'-di(t-butylperoxy)diisopropylbenzene and a quinoid-based vulcanizing agent, and which did not contain a urea-based foaming auxiliary, and also the rubber foam of Example 8 prepared from a rubber foam composition to which a urea-based foaming agent had been added in an amount of about 0.1% by mass relative to the entire amount of the rubber foam composition (i.e., a rubber foam prepared from a rubber foam composition of the present invention substantially not containing a urea-based foam auxiliary) were acceptable in low metal corrosive properties, in low fogging properties and in reduced odor, were free of bloom or tackiness on the rubber foam surface, and exhibited good foaming properties. In contrast, an odor was noticed in Comparative Examples 1 and 2, which used other organic peroxide-based vulcanizing agents, and in Comparative Examples 6 to 9, to which a urea-based foaming auxiliary had been added in an amount of about 1.4% by mass relative to the entire amount of the rubber foam composition. Comparative Example 9 that used sulfur as the vulcanizing agent exhibited corrosivity to metal. Comparative Example 3 that used only α,α'-di(t-butylperoxy)diisopropylbenzene as the vulcanizing agent showed bloom and tackiness on the rubber foam surface. Comparative Examples 4 and 5 that each used only a quinoid-based vulcanizing agent as the vulcanizing agent exhibited poor foaming properties.

As described above, it is shown that a rubber foam composition of the present invention provides a rubber foam that has low metal corrosive properties, low fogging properties and reduced odor, is free of surface tackiness and bloom, and exhibits good foaming properties.

### Industrial Applicability

The present invention can provide a rubber foam used for a high quality seal, dust preventive material, heat insulator, noise absorber, vibration absorber, shock absorber, filler and the like having low corrosivity to metal, low fogging characteristics, and a low odor level, which can be advantageously used in a vehicle, an electric installation, audio equipment building, household equipment, a construction and the like.

## Claims

1. A rubber foam composition comprising a rubber component including a copolymer rubber of ethylene, an α-olefin having three or more carbon atoms and a non-conjugated diene, a vulcanizing agent, and a foaming agent, wherein
the vulcanizing agent comprises α,α'-di(t-butylperoxy)diisopropylbenzene and a quinoid-based vulcanizing agent, and wherein
the rubber foam composition is substantially free of urea-based foaming auxiliary.

2. The rubber foam composition according to claim 1, wherein the quinoid-based vulcanizing agent is p,p'-dibenzoylquinone dioxime.

3. The rubber foam composition according to claim 1 or 2, wherein a total content of the vulcanizing agent is 1 to 10 parts by mass relative to 100 parts by mass of the rubber component.

4. The rubber foam composition according to any one of claims 1 to 3, wherein a ratio (A/B) of a content (A) of the α,α'-di(t-butylperoxy)diisopropylbenzene relative to a content (B) of the quinoid-based vulcanizing agent in the vulcanizing agent is in a range from 0.1 to 2.4.

5. The rubber foam composition according to any one of claims 1 to 4, wherein the foaming agent is azodicarbonamide.

6. The rubber foam composition according to any one of claims 1 to 5, wherein the copolymer rubber is an ethylene-propylene-diene copolymer rubber.

7. A rubber foam containing a vulcanized foam of the rubber foam composition according to any one of claims 1 to 6.
